# FASCICULE DE BREVET EUROPEEN

(11) **EP 1 315 439 B1**
(45) Date de publication et mention de la délivrance du brevet: **25.08.2004**
(21) Numéro de dépôt: 01967438.1
(22) Date de dépôt: 06.09.2001
(51) Int. Cl.: A47J 43/14

(54) **PROCEDE ET INSTALLATION POUR OUVRIR DES OEUFS**
VERFAHREN UND VORRICHTUNG ZUR ERÖFFNUNG VON EIERN
METHOD AND INSTALLATION FOR OPENING EGGS

(30) Priorité: 07.09.2000 FR 0011400
(43) Date de publication de la demande: 04.06.2003
(73) Titulaire: Domaine des Genêts, 41300 Pierrefitte sur Sauldre (FR)
(72) Inventeur: CARLIER, Patrick, Yves, Jacques, 41300 Pierrefitte sur Sauldre Cédex 847 (FR)
(74) Mandataire: Cabinet HERRBURGER
(86) Numéro de dépôt international: PCT/FR2001/002769
(87) Numéro de publication internationale: WO 2002/019881

(56) Documents cités:
- DD-A- 291 471
- DE-A- 4 322 252
- US-A- 5 285 750
- PATENT ABSTRACTS OF JAPAN vol. 014, no. 571 (C-0790), 19 décembre 1990 (1990-12-19) & JP 02 249469 A (KAZUTOSHI MIYAMOTO), 5 octobre 1990 (1990-10-05)
- PATENT ABSTRACTS OF JAPAN vol. 2000, no. 09, 13 octobre 2000 (2000-10-13) & JP 2000 168157 A (LUMONICS PACIFICS CO LTD), 20 juin 2000 (2000-06-20)

## Description

La présente invention concerne un procédé et une installation pour ouvrir des oeufs.

Actuellement, dans l'industrie agro-alimentaire, pour fabriquer des produits à base d'oeufs, on casse les oeufs mécaniquement, pour les vider et réaliser des mélanges d'oeuf en vrac qui seront ensuite filtrés pour éliminer les impuretés, notamment les débris de coquille.

Lorsque l'on souhaite obtenir des portions individuelles, pour fabriquer par exemple des oeufs pochés ou autre préparation unitaire, l'ouverture des oeufs s'effectue d'une façon générale manuelle.

Mais il est important qu'au moment où l'on casse les oeufs, les morceaux de coquilles ne soient pas entraînés avec le blanc ou le jaune d'oeuf.

Mais comme les coquilles ont une structure plus ou moins régulière, il n'est pas possible manuellement, et quelle que soit l'habileté du manipulateur, de casser rapidement les oeufs sans risquer de temps à autre qu'un morceau de coquille ne soit entraîné avec l'intérieur de l'oeuf. Dans le cas où les oeufs cassés sont traités séparément pour constituer une portion sous forme d'omelette, d'oeufs brouillés ou d'oeufs pochés, la présence d'un morceau de coquille dans le produit obtenu après traitement nécessite le rejet du produit occasionnant parfois des pertes très importantes. On arrive ainsi actuellement, dans les meilleures conditions, à des pertes au moins de l'ordre de 15 %, ce qui est particulièrement important.

La présente invention a pour but de permettre d'automatiser dans une large mesure l'ouverture des oeufs tout en réduisant les pertes par entraînement de morceaux de coquille dans le produit consommable.

Selon le document DD-291 471-A il a déjà été proposé d'effectuer la découpe d'une coquille d'oeufs par un faisceau laser qui fait une amorce de rupture pendant la rotation de l'oeuf entraînée par des ventouses placées à ses extrémités.

Ce procédé présente l'avantage de n'être pas polluant puisque la chaleur dégagée à l'impact est stérilisante et qu'il n'y a pas contact d'outillage.

De plus, ce procédé, grâce à l'amorce de rupture réalisée dans la coquille de l'oeuf qui reste néanmoins réunie, quelle que soit la longueur de l'amorce de rupture dans la coquille de l'oeuf, permet de manipuler l'oeuf jusqu'à un poste d'ouverture mécanique de la coquille, ouverture qui peut se faire manuellement.

En effet, en cassant alors l'oeuf, celui-ci se brise suivant la ligne de rupture, donnant une ouverture franche sans morcellement même partiel de la coquille.

Cela permet de réduire largement les pertes. Cette amélioration représente un progrès par réduction des pertes physiques de produits finis et par amélioration de la productivité de la chaîne de fabrication.

Toutefois, selon cette publication antérieure on réalise une amorce de rupture franche continue. Or, comme on veut prédéfinir l'amorce de rupture de préférence sur toute la ligne de rupture, il faut éviter que l'amorce de rupture constitue en fait une ligne de découpe traversant de part en part la coquille qui n'aurait plus alors la tenue nécessaire pour permettre le transport de l'oeuf jusqu'au poste d'ouverture mécanique. De plus, la traversée complète de la coquille par le faisceau laser risque de faire chauffer, voire de brûler partiellement l'intérieur de l'oeuf et de lui donner un goût désagréable.

A cet effet, l'invention concerne un procédé pour ouvrir des oeufs caractérisé en ce que :
- on entaille la coquille avec un faisceau laser impulsionnel pour former une amorce de rupture en pointillés dans la coquille selon une ligne périphérique puis,
- on ouvre la coquille en utilisant l'amorce de rupture.

De manière intéressante, on réalise l'amorce de rupture selon une ligne périphérique de la coquille proche de son équateur.

Selon l'invention, il est particulièrement avantageux de ne pas réaliser d'amorce de rupture continue, d'autant plus que les irrégularités de la coquille, surtout d'épaisseur ou de composition, pourraient entraîner la coupure complète de certaines coquilles ; pour cela il est particulièrement inté ressant de commander le faisceau laser de manière impulsionnelle pour que l'amorce de rupture soit faite en pointillés dans la coquille.

Enfin, de manière particulièrement intéressante, on fait défiler les oeufs à ouvrir en les faisant passer dans le faisceau laser tout en les faisant tourner autour de leur axe en associant deux mouvements, l'un de translation pour faire défiler les oeufs sous la tête d'émission du faisceau laser et l'autre de rotation pour faire tourner l'oeuf autour de son axe polaire sous le faisceau. Ainsi, toute la surface périphérique ou, suivant le cas, une partie de celle-ci, est exposée au faisceau laser et reçoit l'amorce de rupture.

L'invention concerne également une installation pour ouvrir des oeufs notamment pour la mise en oeuvre du procédé tel que défini ci-dessus. Cette installation comprend :
A. une ligne de convoyage recevant les oeufs pour les transporter en ligne avec leur axe dirigé transversalement par rapport à la direction de transport,
B. un poste de prédécoupe ayant
   - un laser dirigeant son faisceau sur la ligne de convoyage,
   - un moyen d'entraînement en rotation des oeufs autour de leur axe pendant leur passage dans le faisceau laser,
   - un circuit de commande commandant l'émission du faisceau laser pendant le passage de chaque oeuf dans la ligne du faisceau et réglant la puissance du faisceau pour réaliser une entaille ne traversant pas la coquille,
C. un poste d'ouverture des oeufs.

Cette installation est caractérisée en ce que le laser coopère avec des moyens permettant de le commander de manière intermittente de façon à émettre un faisceau laser impulsionnel formant dans la coquille une amorce de rupture en pointillés selon une ligne périphérique.

Cette installation est particulièrement simple et peut s'intégrer facilement dans une chaîne de fabrication de produits alimentaires, recevant en entrée les oeufs sur des plateaux qui sont alors dégagés de leur plateau pour être fournis un à un à la ligne de convoyage passant sous le faisceau laser pour réaliser l'amorce de rupture puis les oeufs sont transférés vers le poste d'ouverture.

Il est particulièrement intéressant, en sortie du poste de prédécoupe réalisant de l'amorce de rupture, de transférer les oeufs sur un convoyeur à bande, muni de découpes de forme ovale, constituant des logements recevant en partie chacun un oeuf. L'oeuf est calé par sa coquille contre le bord de la découpe si bien que l'oeuf une fois placé dans le logement n'est pas soumis à des contraintes particulières risquant de favoriser la rupture le long de l'amorce de rupture. Un tel transporteur de sortie convient tout particulièrement pour l'état très fragile dans lequel se trouve l'oeuf en aval du poste de prédécoupé au laser.

De façon avantageuse, la ligne de convoyage comprend :
- un convoyeur formé de deux chaînes sans fin, parallèles, entraînées, reliées par des entretoises libres en rotation, écartées pour former chaque fois entre deux entretoises une alvéole recevant un oeuf,
- un moyen d'entraînement des entretoises en rotation sur elles-mêmes, au moins au niveau du poste de prédécoupe.

Il est particulièrement intéressant que les entretoises soient en forme de diabolos. Ainsi, l'alvéole ou l'espace défini entre deux entretoises en forme de diabolos s'adapte au contour de l'oeuf et facilite sa tenue et son centrage. Comme d'une manière intéressante le moyen d'entraînement en rotation commande la rotation de chaque oeuf pour lui faire exécuter au moins une fraction de tour pendant le passage dans le faisceau laser, il est également possible d'amorcer la rotation de l'oeuf autour de son axe bien en amont du passage de l'oeuf par le faisceau laser. Cette rotation de l'oeuf, non encore fragilisé par une amorce de rupture autour de son axe, favorise le positionnement de l'oeuf sur son axe de symétrie alors qu'à l'entrée du convoyeur il peut se trouver positionné de manière relativement quelconque dans l'alvéole formée par deux diabolos adjacents. Cette rotation de l'oeuf sur lui-même assure automatiquement le positionnement de l'axe de l'oeuf transversalement par rapport à la direction de défilement, et parallèlement à l'axe de rotation des entretoises en forme de diabolos.

Pour éviter le fonctionnement permanent du générateur laser et surtout que celui-ci n'endommage les entretoises, il est intéressant de détecter la présence ou l'absence d'un oeuf dans l'alvéole formée par deux diabolos adjacents, pour commander, en fonction de cette détection, la mise en oeuvre du laser de découpe au moment où cette alvéole arrivera dans la ligne de tir du laser. Le détecteur de présence d'un oeuf peut se trouver décalé de quelques pas en amont de la ligne de découpe au laser puisque l'électronique permet d'identifier chaque alvéole, de calculer le temps de parcours nécessaire de l'alvéole jusqu'à la ligne d'action du laser puis de commander le laser s'il y a effectivement un oeuf dans l'alvéole ou interdire son fonctionnement au moment où cette alvéole vide passera sous le laser de découpe. Il est également intéressant de munir le poste de prédécoupe d'un extracteur de gaz et de poussières situé au niveau de la zone d'action du faisceau laser pour évacuer directement les produits de combustion et de sublimation dégagés par l'action du faisceau laser sur la coquille d'oeuf en cours de prédécoupe.

D'une manière particulièrement intéressante, cet extracteur fonctionne comme un venturi avec une sortie en entonnoir dans laquelle souffle une buse dirigeant un jet d'air dans le cône pour entraîner par dépression les gaz et les poussières dégagés par la formation au laser de la prédécoupe dans la coquille.

La présente invention sera décrite ci-après de manière plus détaillée à l'aide des dessins annexés dans lesquels :
- la figure 1 est une vue schématique de la mise en oeuvre du procédé selon l'invention,
- la figure 2 est une vue à échelle agrandie de l'amorce de rupture réalisée dans une coquille d'oeuf,
- la figure 3 est une vue en élévation en partie par blocs d'une installation pour ouvrir des oeufs selon la présente invention,
- la figure 4 est une vue de dessus correspondant à une partie de la figure 3,
- la figure 5 montre schématiquement une succession d'étapes de prédécoupe d'un oeuf dans le dispositif de prédécoupe.

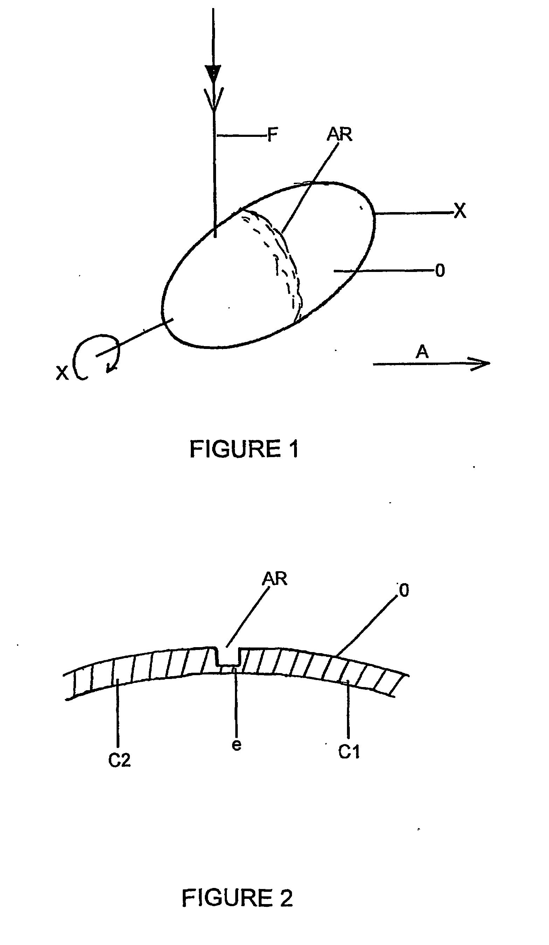

Selon la figure 1, l'invention concerne un procédé pour ouvrir des oeufs, selon lequel on entaille la coquille d'un oeuf O à l'aide d'un faisceau laser F pour former une amorce de rupture AR dans la coquille. De façon avantageuse, on réalise cette amorce de rupture AR selon une ligne périphérique équatoriale et en faisant tourner l'oeuf autour de son axe X pendant qu'il est présenté au faisceau laser F. L'oeuf 0 défile également dans le sens de la flèche A. La rotation de l'oeuf dans le faisceau laser permet de réaliser une prédécoupe ou entaille correspondant à cette rotation d'une fraction de tour ou d'un tour complet et plus suivant la nature des moyens utilisés en aval pour ouvrir l'oeuf. comme l'oeuf tourne autour de son axe, en cas de tour complet, le faisceau laser réalise une amorce de rupture selon une boucle fermée.

La figure 2 est une vue en coupe très schématique et à échelle agrandie de l'amorce de rupture AR réalisée dans la coquille de l'oeuf O. Cette amorce de rupture relativement irrégulière est de préférence en pointillés. Elle laisse subsister une épaisseur (e) pour que les deux parties C1, C2 de la coquille, séparées par la ligne d'amorce de rupture AR, restent néanmoins réunies en laissant à l'oeuf la tenue mécanique nécessaire aux manipulations ultérieures, c'est-à-dire l'ouverture de la coquille, qui ne peut se faire à l'endroit où se fait la prédécoupe.

En réglant la puissance du faisceau laser F et en particulier en faisant travailler le faisceau de manière impulsionnelle, on réalise une amorce de rupture AR qui correspond à une profondeur en « pointillés ». En d'autres termes, l'invention consiste à maîtriser la définition du pointillé (longueur et profondeur des parties évidées, longueur des parties intactes) avec l'utilisation d'un générateur d'impulsion ou autre procédé et avec la maîtrise des vitesses de translation et de rotation des oeufs.

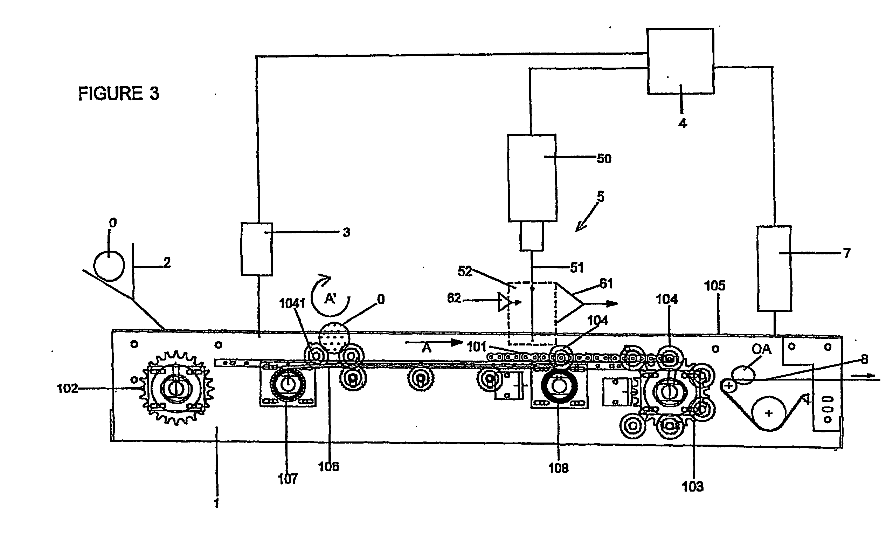

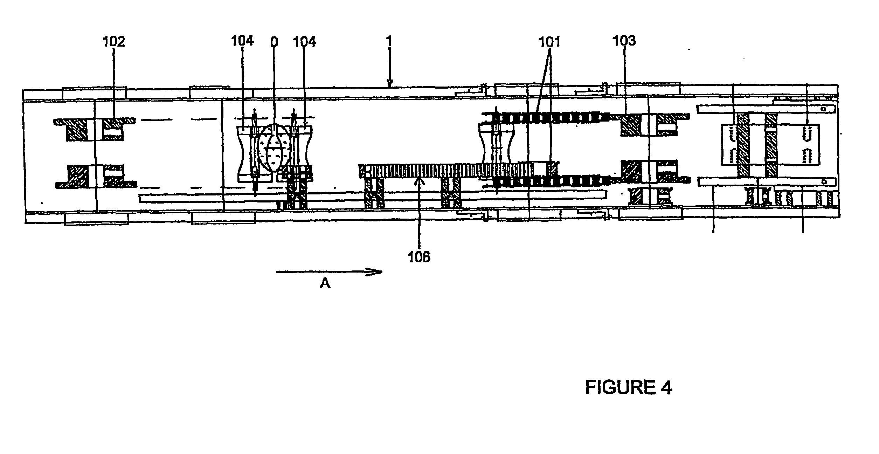

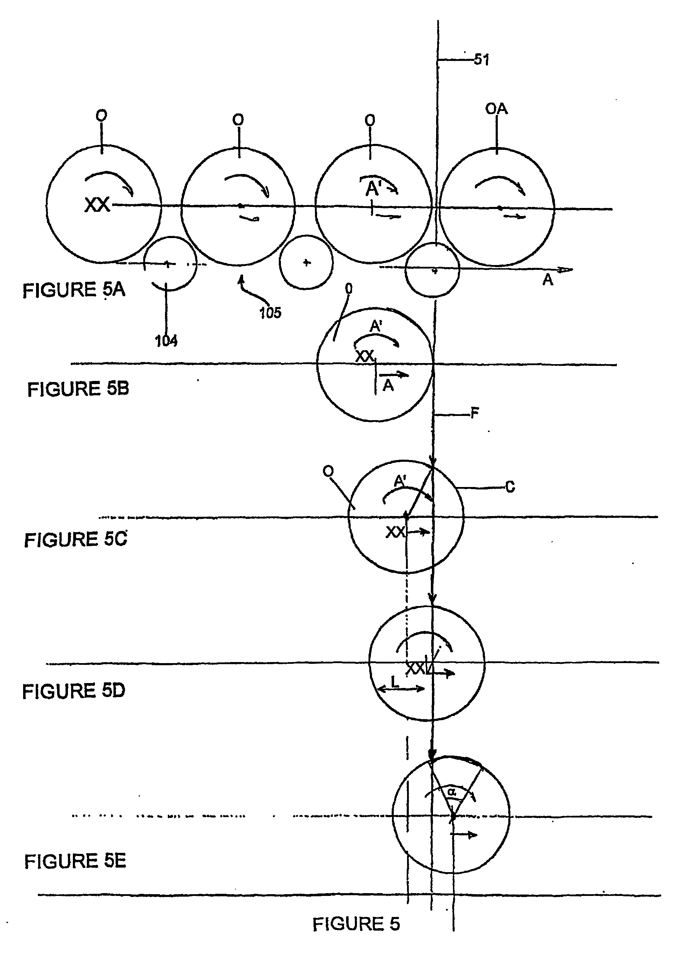

Les figures 3, 4 montrent schématiquement une installation selon l'invention pour la mise en oeuvre du procédé décrit ci-dessus et la figure 5 sert à expliquer le mouvement d'un oeuf au niveau du faisceau laser.

L'installation pour ouvrir des oeufs se compose d'une ligne de convoyage 1 recevant des oeufs O à l'entrée, par exemple située à gauche, pour les transporter dans un poste de prédécoupe 5 et, enfin, les évacuer vers le poste d'ouverture non représenté.

L'entrée des oeufs O est représentée schématiquement par le dispositif 2. Ces oeufs arrivent sur la ligne de convoyage 1 formée d'un convoyeur à double chaîne 101 passant sur deux pignons 102, 103 assurant l'entraînement des doubles chaînes. Ces doubles chaînes sont reliées par des traverses 104 en forme de diabolos, séparées d'un intervalle de manière à former entre deux traverses, une alvéole ou logement 105 recevant un oeuf O.

Les traverses 104 en forme de diabolos sont libres en rotation autour de leur axe par rapport aux chaînes, perpendiculairement au plan de la figure 3. Le convoyeur 1 défile dans la direction de la flèche A, de la gauche vers la droite. Chaque traverse 104 comporte un pignon 1041, denté, en prise avec un moyen d'entraînement en rotation constitué par une courroie crantée sur les deux côtés 106 passant sur deux poulies 107, 108. Cette courroie est entraînée dans la direction A, de façon à ce que les oeufs ayant une translation de gauche à droite aient une rotation dans le sens des aiguilles d'une montre.

En effet, la forme de diabolo des traverses 104 donne aux alvéoles 105 une forme d'ellipse, d'axe transversal de sorte qu'automatiquement, sous l'effet de la rotation communiquée aux oeufs O par les traverses 104, les oeufs s'alignent de façon que leur axe soit également dirigé transversalement par rapport à la direction de défilement A et surtout qu'ils tournent ainsi autour de leur axe.

L'installation comporte également un détecteur de présence 3 qui détecte sur la ligne de convoyage 1, à proximité immédiate du poste de prédécoupe la présence ou l'absence d'un oeuf dans une alvéole 105.

En cas d'absence d'oeuf, l'alvéole est signalée au circuit de commande 4 de l'installation pour que celle-ci commande le fonctionnement en conséquence. Seule la présence d'un oeuf sous la tête de focalisation autorise le tir du faisceau laser.

Le poste de prédécoupe 5 comporte un laser 50 dirigeant son faisceau 51 vers la ligne de convoyage 1. Ce laser 5 est commandé de manière intermittente et impulsionnelle : le laser émet son faisceau 51 lorsqu'un oeuf O se trouve dans la zone de prédécoupe 52 (indiquée par un rectangle en trait interrompu) pour être sûr que le faisceau 51 rencontre une coquille d'oeuf. Le circuit de commande 4 fait également fonctionner le laser 5 de manière impulsionnelle pour que pendant la période de traitement d'une coquille d'oeuf, le faisceau laser 51, émis, soit impulsionnel pour créer une amorce de rupture en pointillés dans la coquille.

Le poste de prédécoupe comporte également dans la zone de prédécoupe 52 un extracteur formé d'un entonnoir 61 et d'une buse 62 dirigeant un jet dans l'entonnoir 61 pour entraîner les gaz, vapeurs et poussières dégagés au moment de la réalisation de l'amorce de rupture.

Enfin, l'installation comporte un moyen d'entraînement 7 pour commander le mouvement de la ligne de convoyage 1 et de ses différents accessoires.

En sortie, la ligne de convoyage 1 est reliée à un convoyeur 8 qui reçoit les oeufs avec leur amorce de découpe OA pour les transférer vers le poste d'ouverture mécanique non représenté. Le convoyeur 8 est un convoyeur à bande munie d'orifices de forme ovale d'une section nettement inférieure à celle d'un oeuf pour recevoir les oeufs prédécoupés qui seront calés contre le bord des orifices.

La figure 4 est une vue de dessus schématique de la ligne de convoyage montrant partiellement les différents moyens déjà décrits ci-dessus.

La figure 5 se compose d'un ensemble de schémas, superposés, et orientés par rapport à la ligne d'action 51, verticale, Du faisceau laser.

A la figure 5A, on a représenté les oeufs O, placés dans les alvéoles 105, entre les traverses 104 en forme de diabolos, et entraînés en translation dans la direction de la flèche A, de la gauche vers la droite, à travers la ligne d'action 51 du faisceau laser et en rotation autour de leur axe dans le sens A"

La figure 5B montre l'arrivée d'un oeuf O, arrivant sur la ligne 51.

Dès que l'oeuf O atteint la position représentée à la figure 5C, le faisceau laser F est mis en oeuvre et il attaque la coquille C de l'oeuf O. Pendant ce temps, l'oeuf tourne autour de son axe XX tout en se déplaçant de façon à décrire au moins un tour complet pendant que l'axe XX de l'oeuf parcourt la distance L (figure 5D, figure 5E). A la fin de cette rotation, on se trouve à la figure 5E et l'amorce de rupture à été tracée sur toute la périphérie de l'oeuf.

Il est également possible de faire tourner l'oeuf plus rapidement autour de son axe, par exemple pour lui faire décrire une rotation supérieure à un tour.

L'inverse est également vrai, suivant la nature de l'amorce de rupture à réaliser.

Des essais faits dans le cadre de la présente invention ont montré qu'avec un laser d'une puissance de 200W, on pouvait réaliser l'amorce de rupture à raison de deux oeufs à la seconde. Les études préalables ont indiqué qu'il fallait une énergie de 100 joules par oeuf entièrement découpé.

## Revendications

1. Procédé pour ouvrir des oeufs **caractérisé en ce qu'**
- on entaille la coquille avec un faisceau laser impulsionnel (F) pour former une amorce de rupture (AR) en pointillés dans la coquille selon une ligne périphérique puis
- on ouvre la coquille en utilisant l'amorce de rupture.

2. Procédé selon la revendication 1,
**caractérisé en ce qu'**
on fait défiler les oeufs à ouvrir en passant dans le faisceau laser et en faisant tourner les oeufs (0) autour de leur axe (XX).

3. Installation pour ouvrir des oeufs notamment pour la mise en oeuvre du procédé selon la revendication 1, comprenant :
A. une ligne de convoyage (1) recevant les oeufs (0) pour les transporter en ligne avec leur axe (XX) dirigé transversalement par rapport à la direction de transport (A),
B. un poste de prédécoupe (5) ayant .
- un laser (50) dirigeant son faisceau (51) sur la ligne de convoyage (1),
- un moyen d'entraînement (104, 1041, 106) en rotation des oeufs (0) autour de leur axe (XX) pendant leur passage dans le faisceau laser,
- un circuit de commande (4) commandant l'émission du faisceau laser (51) pendant le passage de chaque oeuf (0) dans la ligne du faisceau et réglant la puissance du faisceau pour réaliser une entaille ne traversant pas la coquille,
C. un poste d'ouverture des oeufs.
**caractérisée en ce que**
le laser (50) coopère avec des moyens permettant de le commander de manière intermittente de façon à émettre un faisceau laser impulsionnel formant dans la coquille une amorce de rupture en pointillés selon une ligne périphérique.

4. Installation selon la revendication 3,
**caractérisée en ce que**
la ligne de convoyage (1) comprend
- un convoyeur formé de deux chaînes sans fin (101), parallèles, entraînées (102, 103, 7), reliées par des entretoises (104) libres en rotation, écartées pour former chaque fois entre deux entretoises (104) une alvéole (105) recevant un oeuf (0),
- un moyen d'entraînement des entretoises en rotation sur elles-mêmes (1041, 106, 107, 108), au moins au niveau du poste de prédécoupe (5).

5. Installation selon la revendication 3,
**caractérisée en ce que**
les entretoises (104) ont une forme de diabolo.

6. Installation selon la revendication 4,
**caractérisée en ce que**
le moyen d'entraînement (1041, 106, 107, 108) en rotation commande la rotation de chaque oeuf (0) pour lui faire exécuter au moins une fraction de tour pendant le passage de l'oeuf dans le faisceau laser (51).

7. Installation selon la revendication 3,
**caractérisée en ce que**
le poste de prédécoupe (5) comporte un détecteur (3) détectant la présence d'un oeuf (0) dans l'alvéole (105) arrivant dans le faisceau laser (51) pour commander la mise en oeuvre du faisceau.

8. Installation selon la revendication 3,
**caractérisée en ce que**
le poste de prédécoupe (5) comporte un extracteur de gaz et poussières (61, 62) situé au niveau du faisceau laser (51) pour évacuer les produits de combustion et de sublimation dégagés par l'action du faisceau laser sur une coquille d'oeuf.

9. Installation selon la revendication 8,
**caractérisée en ce que**
l'extracteur (61, 62) est formé d'un entonnoir (61) et d'une buse (62) dirigeant un jet d'air dans le cône de l'entonnoir pour entraîner par dépression, les dégagements gazeux ou de poussières formés par la découpe d'une coquille.

## Patentansprüche

1. Verfahren zur Eröffnung von Eiern, **dadurch gekennzeichnet, dass**
- die Schale mit einem Impulslaserstrahl (F) eingekerbt wird, um in der Schale einen punktierten Anriss (AR) entlang einer Umfangslinie zu bilden, und anschließend
- die Schale unter Verwendung des Anrisses geöffnet wird.

2. Verfahren nach Anspruch 1, **dadurch gekennzeichnet, dass** man die zu öffnenden Eier durchlaufen lässt, wobei sie den Laserstrahl passieren und wobei sich die Eier (O) um ihre Achse (XX) drehen.

3. Vorrichtung zur Eröffnung von Eiern, insbesondere zum Einsatz des Verfahrens nach Anspruch 1, umfassend:
A.eine Förderline (1), die die Eier (O) aufnimmt, um sie in einer Reihe zu befördern, wobei ihre Achse (XX) in Bezug auf die Transportrichtung (A) quer ausgerichtet ist,
B.eine Vorschneidestation (5) mit
- einem Laser (50), der seinen Strahl (51) auf die Förderstrecke (1) richtet,
- einem Mittel (104, 1041, 106), das die Eier (O) während ihres Durchlaufs durch den Laserstrahl in eine Drehbewegung um ihre Achse (XX) versetzt,
- einem Steuerkreis (4), der die Ausstrahlung des Laserstrahls (51) während des Durchlaufs jedes Eis (O) durch die Linie des Strahls steuert und die Stärke des Strahls regelt, um eine Einkerbung zu bilden, die nicht durch die Schale dringt,
C. eine Station zur Öffnung der Eier,
**dadurch gekennzeichnet, dass** der Laser (50) mit Mitteln zusammenarbeitet, die es ermöglichen, ihn auf intermittierende Weise zu steuern, derart, dass ein Impulslaserstrahl ausgesendet wird, der in der Schale einen punktierten Anriss entlang einer Umfangslinie bildet.

4. Vorrichtung nach Anspruch 3, **dadurch gekennzeichnet, dass** die Förderstrecke (1) umfasst:
- ein Förderband, das aus zwei parallelen, angetriebenen (102, 103, 7) Endlosbändern (101) gebildet ist, die durch frei drehbare Zwischenstücke (104) miteinander verbunden sind, die so voneinander beabstandet sind, dass jeweils zwischen zwei Zwischenstücken (104) eine Zelle (105) gebildet wird, die ein Ei (O) aufnimmt,
- ein Antriebsmittel (1041, 106, 107, 108), das die Zwischenstücke wenigstens im Bereich der Vorschneidestation (5) in eine Drehbewegung um sich selbst versetzt.

5. Vorrichtung nach Anspruch 3, **dadurch gekennzeichnet, dass** die Zwischenstücke (104) die Form einer doppelkegeligen Rolle aufweisen.

6. Vorrichtung nach Anspruch 4, **dadurch gekennzeichnet, dass** das Mittel zum Antreiben (1041, 106, 107, 108) in eine Drehbewegung die Drehung jedes Eis (O) steuert, um es während des Durchlaufs des Eis durch den Laserstrahl (51) wenigstens einen Bruchteil einer Drehbewegung ausführen zu lassen.

7. Vorrichtung nach Anspruch 3, **dadurch gekennzeichnet, dass** die Vorschneidestation (5) einen Detektor (3) umfasst, der die Gegenwart eines Eis (O) in der Zelle (105) erkennt, die beim Laserstrahl (51) eintrifft, um den Einsatz des Strahls zu steuern.

8. Vorrichtung nach Anspruch 3, **dadurch gekennzeichnet, dass** die Vorschneidestation (5) einen Gas- und Staubextraktor (61, 62) umfasst, der im Bereich des Laserstrahls (51) angeordnet ist, um die Verbrennungsund Sublimationsprodukte zu entfernen, die durch die Einwirkung des Laserstrahls auf eine Eierschale freigesetzt werden.

9. Vorrichtung nach Anspruch 8, **dadurch gekennzeichnet, dass** der Extraktor (61, 62) aus einem Trichter (61) und einer Düse (62) gebildet wird, die einen Luftstrahl in den Kegel des Trichters richtet, um die durch das Schneiden einer Schale gebildeten gas- und staubförmigen Freisetzungen durch Unterdruck fortzureißen.

## Claims

1. Method for opening eggs, **characterised in that**
- the shell is indented with a pulsed laser beam (F) in order to form a dotted incipient break (AR) in the shell along a peripheral line then
- the shell is opened using the incipient break.

2. Method according to claim 1,
**characterised in that**
the eggs to be opened are conveyed and pass into the laser beam whilst the eggs (0) are rotated about the axis (XX) thereof.

3. Installation for opening eggs, in particular for carrying out the method according to claim 1, comprising:
A. a conveying line (1) which receives the eggs (0) in order to transport them in a line with the axis (XX) thereof directed transversely relative to the direction of transport (A),
B. a pre-cutting station (5) having
- a laser (50) which directs its beam (51) towards the conveying line (1),
- a means (104, 1041, 106) for causing the eggs (0) to rotate about the axis (XX) thereof during their passage into the laser beam,
- a control circuit (4) which controls the emission of the laser beam (51) during the passage of each egg (0) into the line of the beam and which controls the power of the beam in order to produce an indentation which does not extend through the shell,
C. a station for opening the eggs,
**characterised in that**
the laser (50) co-operates with means which allow it to be controlled in an intermittent manner in order to emit a pulsed laser beam which forms a dotted incipient break in the shell along a peripheral line.

4. Installation according to claim 3,
**characterised in that**
the conveying line (1) comprises:
- a conveyor which is formed by two endless, parallel chains (101) which are driven (102, 103, 7) and which are connected by cross-pieces (104) which are free to rotate and which are separated in order to form, in each case between two cross-pieces (104), a cell (105) which receives an egg (0),
- a means (1041, 106, 107, 108) for causing the cross-pieces to rotate about themselves, at least in the region of the precutting station (5).

5. Installation according to claim 3,
**characterised in that**
the cross-pieces (104) are in the form of a diabolo.

6. Installation according to claim 4,
**characterised in that**
the means (1041, 106, 107, 108) for driving in rotation control the rotation of each egg (0) in order to make the egg carry out at least a fraction of a turn during the passage of the egg into the laser beam (51).

7. Installation according to claim 3,
**characterised in that**
the pre-cutting station (5) comprises a detector (3) which detects the presence of an egg (0) in the cell (105) which is arriving at the laser beam (51) in order to control the operation of the beam.

8. Installation according to claim 3,
**characterised in that**
the pre-cutting station (5) comprises a gas and dust extractor (61, 62) which is located in the region of the laser beam (51) in order to discharge the combustion and sublimation products which are released by the action of the laser beam on an eggshell.

9. Installation according to claim 8,
**characterised in that**
the extractor (61, 62) is formed by a funnel (61) and a nozzle (62) which directs a jet of air into the cone of the funnel in order to carry, by means of reduced pressure, the emissions of gas or dust which are formed by a shell being cut.
